(19) Europäisches Patentamt
European Patent Office
Office européen des brevets

(11) **EP 3 467 719 A1**

(12) **EUROPÄISCHE PATENTANMELDUNG**

(43) Veröffentlichungstag:
**10.04.2019 Patentblatt 2019/15**

(51) Int Cl.:
**G06N 3/02** (2006.01)  **G06N 3/04** (2006.01)
**G06N 7/00** (2006.01)

(21) Anmeldenummer: **18195661.6**

(22) Anmeldetag: **20.09.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **06.10.2017 DE 102017123200**

(71) Anmelder: **Valeo Schalter und Sensoren GmbH**
**74321 Bietigheim-Bissingen (DE)**

(72) Erfinder:
• **Honer, Jens**
  **74321 Bietigheim-Bissingen (DE)**
• **Gotzig, Heinrich**
  **74321 Bietigheim-Bissingen (DE)**
• **Eraqi, Hesham**
  **Giza, Cairo (EG)**

(54) **HYBRIDE KRAFTFAHRZEUG-SENSORVORRICHTUNG MIT EINEM NEURONALEN NETZ UND EINEM BAYES'SCHEN FILTER, SOWIE VERFAHREN ZUM BETREIBEN EINER SOLCHEN KRAFTFAHRZEUG-SENSORVORRICHTUNG**

(57)     Die Erfindung betrifft ein Verfahren zum Betreiben einer Sensorvorrichtung (2) eines Kraftfahrzeugs (1), mit einem a) Bereitstellen von einer Messinformation durch eine Sensoreinheit (5) der Sensorvorrichtung (2); einem b) Klassifizieren der bereitgestellten Messinformation durch ein neuronales Netz (6) der Sensorvorrichtung (2); und einem c) Filtern eines Ergebnisses des Klassifizierens mittels eines Bayes'schen Filters (7) der Sensorvorrichtung (2), sodass das Ergebnis in Abhängigkeit einer für den Bayes'schen Filter (7) vorgegebenen Zustandsinformation an einen von der Zustandsinformation repräsentierten Zustand des Kraftfahrzeugs (1) oder eines Objekts (4) in der Umgebung (3) des Kraftfahrzeugs (1) angepasst wird, um die Schwächen bekannter Sensorvorrichtungen zu überwinden und das Verarbeiten einer Messinformation zu verbessern.

Fig.1

EP 3 467 719 A1

**Beschreibung**

Die Erfindung betrifft eine Sensorvorrichtung für ein Kraftfahrzeug, mit einer Sensoreinheit zum Bereitstellen von einer Messinformation sowie mit einem neuronalen Netz zum Klassifizieren der bereitgestellten Messinformation. Die Erfindung betrifft auch ein Verfahren zum Betreiben einer solchen Sensorvorrichtung.

Das sogenannte tiefe Lernen ("deep learning") ist ein Zweig des Maschinenlernens, welcher mittels einer Reihe von Lernalgorithmen hochgradige Abstraktionen von Daten oder Informationen modelliert. Mit der steigenden Verfügbarkeit von graphischen Rechenheiten (Graphical Processing Unit, GPU) wird dieses tiefe Lernen in praktisch allen Bereichen der Computertechnik immer wichtiger. Die Schlüsselidee ist hier, das jeweilige System selbstständig lernen zu lassen anstelle des traditionellen manuellen Aufsetzens der Systeme mit spezifisch (per Hand) programmierten Algorithmen. Für das tiefe Lernen wird im Allgemeinen eine sehr große Menge an (billiger) Rechenkraft benötigt und (teure) kommentierte oder konnotierte Daten ("annotated data"), um das System in einem überwachten Lernprozess ("supervised learning") trainieren zu können.

Im Bereich des autonomen Fahrens sind gegenwärtig sogenannte End-zu-End-Ansätze in Erprobung, bei welchen ein neuronales Netzwerk, mit welchem das tiefe Lernen realisiert wird, als Eingabe mit Rohdaten, typischerweise Kameradaten, versorgt wird und bei welchen als Ausgabe des neuronalen Netzwerks ein Kontrollsignal für das vollständige Kontrollieren einer Fahrfunktion des Fahrzeugs ausgegeben wird. Dies liegt daran, dass das neuronale Netz über das tiefe Lernen ein vollständiges Verhalten erlernt, sodass ein spezifisches Modellieren beispielsweise über ein Bewegungsmodell des Kraftfahrzeugs nicht notwendig ist. Dies ist allerdings auch eine Schwäche derartiger Ansätze, da grundsätzlich, beispielsweise bei einem bekannten Bewegungsmodell für ein Kraftfahrzeug, das Erlernen des gesamten Zusammenhangs zwischen Roh-Eingangsdaten und Ausgangs-Kontrollsignal im Prinzip ein unnötiger Aufwand ist, da hier für das Erlernen eines an sich bereits bekannten Zusammenhangs, beispielsweise eben des besagten Bewegungsmodells für das Kraftfahrzeug, die Kapazität des lernenden Systems wesentlich größer sein muss als wenn es den bekannten Zusammenhang nicht lernen müsste und aufgrund eines fehlerhaften Lernens auch unvorhersehbare Artefakte auftreten können.

Überdies gibt es bestimmte Aufgaben, in welchen neuronale Netze besonders gut sind, wie beispielsweise in Klassifizierungsaufgaben, und andere Aufgaben, in welchen sie schlechter funktionieren, beispielsweise in Planungsaufgaben. Dabei können neuronale Netzwerke um Planungsaufgaben besser zu bewältigen mit einem Gedächtnis ausgestattet werden, indem eine Rekursion in das neuronale Netz eingefügt wird. Bei frühen lernenden Algorithmen beziehungsweise lernenden neuronalen Netze tauchen dabei die wohlbekannten Probleme der verschwindenden oder explodierenden Gradienten auf: Da die unterschiedlichen Schichten des neuronalen Netzes und folglich Zeitschritte in einem solchen rekursiven neuronalen Netz zueinander mit einer Multiplikation verknüpft sind, sind diese nämlich sehr empfindlich für eine Selbstverstärkung oder eine Auslöschung neuronaler Aktivität. Daher haben rekursive oder rekurrente neuronale Netzwerke (Recurrent Neuronal Networks, RNN) viele Schwierigkeiten, Abhängigkeiten zu erlernen, welche über einen längeren Zeitraum bestehen, typischerweise über mehr als zehn Zeitschritte.

Diese Probleme wurden mit den sogenannten langen Kurzzeit-Gedächtnis-Netzwerken (Long Short Term Memory Network, LSTM-Network) gelöst, in welchem für das Netzwerk explizit ausgewählt wird, welche Informationen dauerhaft gespeichert werden sollen. Dies reduziert das Risiko, bereits gelernte Informationen und Zusammenhänge zu zerstören, da ein verschwindender Gradient beziehungsweise verschwindende Verknüpfungen in dem neuronalen Netz eine Information, welche explizit erinnert wird, nicht betrifft. Dabei werden durch das hinzugefügte explizite Gedächtnis jedoch auch zusätzliche Parameter hinzugefügt und entsprechend die Komplexität des lernenden Systems deutlich erhöht, sodass das Finden der besten oder optimalen Lösung schwieriger wird.

Andererseits funktionieren Bayes'sche Filter (also sogenannte Bayes'sche Inferenzmodelle, Bayesian Inference Model) die hier und im Folgenden im Sinne eines rekursiven Bayes'schen Schätzers verstanden werden können und welche beispielsweise in Form des klassischen Kalman-Filters bekannt sind, sehr gut in Situationen, in welchen eine Messinformation oder Messung leicht mit einem entsprechenden (insbesondere internen) Zustand verknüpft werden können. Da in realen Szenarien diese Relation zwischen Messungen oder Messinformation und einem (System-) Zustand, insbesondere einem internem Zustand (Internal State) oft nicht bekannt ist, folgen Probleme und ein erheblicher Aufwand bei dem Modellieren der realen Situation über einen Bayes'schen Filter beziehungsweise mit einem Bayes'schen Inferenzmodell. Dabei tauchen die problematischen Verarbeitungsschritte sämtlich in einer einzigen Zeitinstanz auf, das heißt betreffen die problematischen Verarbeitungsschritte betreffen reine Klassifikationsprobleme, in welchen, wie oben erläutert, neuronale Netzwerke sehr gut funktionieren.

Es stellt sich somit die Aufgabe, die Schwächen bekannter Sensorvorrichtungen in Kraftfahrzeugen zu überwinden und das Verarbeiten einer Messinformation in derartigen Sensorvorrichtungen zu verbessern.

Diese Aufgabe wird durch die Gegenstände der unabhängigen Patentansprüche gelöst. Vorteilhafte Ausführungsformen ergeben sich aus den abhängigen Patentansprüchen, der Beschreibung und den Figuren.

Grundsätzlich wird hier ein hybrides System mit einem neuronalen Netzwerk und einem Bayes'schen Filter vorgeschlagen. Dabei kann grundsätzlich anstelle des neuronalen Netzwerks auch jegliches bekannte lernende System aus dem Bereich des Maschinenlernens benutzt werden, beispielsweise eine Stützvektormaschine ("support vector machine", SVM), aufgrund des besseren Umgangs mit komplexen Daten wird jedoch ein neuronales Netz bevorzugt. Die grundsätzliche Idee ist hier, die jeweiligen Ansätze, also das neuronale Netz und den Bayes'schen Filter, nur in den Teilbereichen anzuwenden, in welchen sie besonders gute Ergebnisse liefern. Dabei wird die übliche Bayes'sche Rekursion beziehungsweise der übliche Bayes'sche Filter genutzt, wobei allerdings das Messmodell, das heißt die Relation zwischen Eingangsdaten und (internem) Zustand durch das neuronale Netz bestimmt wird. In dem Standardansatz $P(A|B) = \frac{P(B|A)*P(A)}{P(B)}$ wird somit $P(B|A)$ über das neuronale Netz implementiert beziehungsweise bestimmt. Der Prior P(A) wird dabei durch eine vorgegebenen Zustandsinformation vorgegeben oder bestimmt.

Die Überlegungen hinter diesem Ansatz sind, dass der (interne) Zustand eines Systems, welches eingeschätzt werden soll mit dem Bayes'schen Filter oder Bayes'schen Schätzer, mit vernünftigen Annahmen oftmals relativ einfach abgeschätzt werden kann. So ist beispielsweise ein Bewegungsmodell für die Bewegung eines Kraftfahrzeugs relativ einfach. Auf der anderen Seite ist die Beziehung zwischen einem (internen) Zustand dieses entsprechenden Kraftfahrzeugs, beispielsweise eines Lenkwinkels, zu erfassten Daten, beispielsweise einem von einem Lidar erfassten Umgebungsbild, extrem kompliziert. Wenngleich also ein Lernen des Bewegungsmodells durch ein neuronales Netz auch im besten Fall keinen zusätzlichen Nutzen bringt, da ein optimaler Bayes'scher Schätzer mit geringem Aufwand aufgesetzt werden kann, bringt das Lernen der genannten Relation des Zustands zu den Messinformationen einen sehr großen Vorteil, da mittels des tiefen Lernens Merkmale ausgewertet werden können, welche für einen spezifischen, manuell erzeugten Algorithmus viel zu kompliziert sind.

Die Erfindung betrifft entsprechend ein Verfahren zum Betreiben einer Sensorvorrichtung eines Kraftfahrzeugs mit einer Reihe von Verfahrensschritten. Ein erster Verfahrensschritt ist hier ein Bereitstellen von zumindest einer Messinformation durch eine Sensoreinheit der Sensorvorrichtung. Die Messinformation kann die Umgebung des Kraftfahrzeug betreffen und/oder das Kraftfahrzeug selbst. Die Messinformation kann also eine Messinformation über die Umgebung des Kraftfahrzeugs sein und/oder eine Messinformation über das Kraftfahrzeug selber, beispielsweise einen Lenkwinkel des Kraftfahrzeugs. Die Sensoreinheit kann insbesondere einen Umgebungssensor wie beispielsweise eine Kamera und/oder eine Lidareinrichtung und/oder eine Radareinrichtung und/oder einen Ultraschallsensor aufweisen. Die Messinformation kann beispielsweise in Form von Sensordaten, welche die Umgebung repräsentieren, bereitgestellt werden. Beispielsweise kann ein Kamerabild einer Kameraeinheit als Messinformation bereitgestellt werden. Entsprechend kann zuvor durch die Sensorvorrichtung ein Erfassen der Umgebung sowie ein Erzeugen der Sensordaten beziehungsweise der Messinformation erfolgen. Die Messinformation oder die Sensordaten können sodann als Input oder Eingabe in ein neuronales Netz oder Netzwerk eingespeist werden. Das neuronale Netz kann beispielsweise in einer Recheneinheit implementiert sein.

Ein weiterer Verfahrensschritt ist ein Klassifizieren der bereitgestellten Messinformation durch das neuronale Netz der Sensorvorrichtung. Das Klassifizieren kann hier ein Zuordnen einer oder mehrerer entsprechender Größen zu der Messinformation oder den Sensordaten umfassen. Beispielsweise kann so in dem oben genannten Beispiel eines Kamerabildes als Messinformation ein oder mehrere Soll-Lenkwinkel zu einem jeweiligen Kamerabild zugeordnet werden. Alternativ oder ergänzend kann auch zumindest eine Eigenschaft eines in der Umgebung durch die Sensoreinheit erfassten Objektes zugeordnet werden, beispielsweise Abmessungen wie eine Länge und/oder Breite und/oder Höhe des Objektes oder eine Entfernung des Objektes zu der Sensoreinheit. Das Klassifizieren kann hier also in einem weiten Sinne verstanden werden, bei welchem eine hochdimensionale bereitgestellte Messinformation in ein niederdimensionales Klassifikations-Ergebnis überführt wird. Ein Ergebnis des Klassifizierens kann beispielsweise durch eine Aktivitätsverteilung von Ausgabeneuronen (Output Neurons) einer Ausgabeschicht (Output Layer) des neuronalen Netzes repräsentiert und ausgegeben werden. Beispielsweise kann so der dem Kamerabild zugeordnete Soll-Lenkwinkel über eine Populationsvektormethode ausgegeben werden. Liegt das Klassifikationsergebnis beispielsweise in Form einer Aktivitätsverteilung der Neuronen vor, so kann die Aktivitätsverteilung zum Beispiel als Histogramm für das im nächsten Absatz beschriebene Filtern bereitgestellt werden.

Ein weiterer Verfahrensschritt ist ein Filtern eines Ergebnisses des Klassifizierens, also des Klassifizierungsergebnisses, mittels eines Bayes'schen Filters der Sensorvorrichtung, insbesondere eines sequentiellen Bayes'schen Filters, mit welchem sequentiell ein Zustand eines entsprechenden dynamischen Systems abgeschätzt werden kann. Der Bayes'sche Filter ist hier also im Sinne eines rekursiven Bayes'schen Schätzers zu verstehen. Das Filtern erfolgt hier so, dass das Ergebnis in Abhängigkeit einer jeweils (insbesondere dynamisch) für den Bayes'schen Filter vorgegebenen Zustandsinformation an einen von der Zustandsinformation repräsentierten (internen) Zustand des Kraftfahrzeugs oder Zustand eines Objekts in der Umgebung des Kraftfahrzeugs angepasst oder verbessert wird. Die Zustandsinformation kann dabei insbesondere in Form eines Priors für den Bayes'schen Filter vorliegen oder einen solchen Prior umfassen.

Beispielsweise kann als Klassifikationsergebnis der Messinformation, zum Beispiel in dem oben genannten Kamerabild, ein erster Soll-Lenkwinkel als vermeintlicher optimaler Lenkwinkel und ein zweiter Soll-Lenkwinkel als weniger optimaler Lenkwinkel zugeordnet werden. Dies kann beispielsweise durch unterschiedliche Aktivitätslevel der die jeweiligen Lenkwinkel repräsentierenden Ausgabeneuronen der Ausgabeschicht repräsentiert und ausgegeben werden. Aufgrund der vorgegebenen Zustandsinformation wie beispielsweise einem Ist-Lenkwinkel des Kraftfahrzeugs kann durch den Bayes'schen Filter zum Beispiel der erste Soll-Lenkwinkel als ungünstig oder sogar unmöglich und damit unwahrscheinlich für den tatsächlichen optimalen Lenkwinkel ausgefiltert werden. Damit kann dann beispielsweise der zweite vorliegend gemäß dem Klassifizierungsergebnis zunächst nicht optimale Lenkwinkel durch den Bayes'schen Filter unter Berücksichtigung der Zustandsinformation als tatsächlich optimaler Lenkwinkel bestimmt werden.

Ein weiterer Verfahrensschritt kann entsprechend ein Bereitstellen des gefilterten Ergebnisses für eine Steuerfunktion und/oder Regelfunktion, insbesondere eine Fahrfunktion des Kraftfahrzeugs, oder an eine Steuervorrichtung des Kraftfahrzeugs, sein. Das neuronale Netz kann insbesondere ein (reines) vorwärts gerichtetes neuronales Netz, ein sogenanntes Feedforward Neuronal Network, sein. Ein solches Feedforward Neuronal Network hat keine rekursive Schleife, weist also keine Rekursion auf.

Es wird somit ein Hybridsystem aus einem neuronalen Netz und einem Bayes'schen Inferenzmodell in Form des Bayes'schen Filters vorgeschlagen. Mit dem neuronalen Netz werden Messinformationen klassifiziert und anschließend an das Bayes'sche Inferenzmodell übergeben. Das Modell gleicht dann die klassifizierten Messinformationen mit einem (insbesondere internen) Zustand, beispielsweise einem Ist-Zustand, der durch die Zustandsinformation beschrieben wird, ab. Das Modell kann so eine GedächtnisFunktion für das neuronale Netz übernehmen. Auf Basis des Zustands kann dann beispielsweise entschieden werden, ob die Messinformation richtig klassifiziert wurde oder beispielsweise entsprechend ausgewählt werden, welche klassifizierte Messinformation unter der Bedingung des gegebenen Zustands die richtige ist.

Bei dem Hybridsystem können somit die Eingangsinformationen, beispielsweise die Messinformationen eines Umgebungssensors, zunächst mit dem neuronalen Netz im Sinne eines Auswertens klassifiziert werden. Beispielsweise kann so aus einem von einer Frontkamera aufgenommenen Bild ein Soll-Lenkwinkel des eigenen Kraftfahrzeugs bestimmt werden. Ausgabeneuronen des neuronalen Netzes können dann die klassifizierte Messinformation, in diesem Beispiel die bestimmten möglichen Soll-Lenkwinkel, an den Bayes'schen Filter beziehungsweise das Bayes'sche Inferenzmodell weitergeben. Das Modell vergleicht dann vorliegend die von dem neuronalen Netz klassifizierten möglichen Soll-Lenkwinkel mit dem Zustand des Systems, einem Ist-Lenkwinkel, indem es die vom neuronalen Netz vorgeschlagenen Soll-Lenkwinkel unter Berücksichtigung des Ist-Lenkwinkels (allgemein der Zustandsinformation) filtert und bestimmt so auf Basis des Ist-Lenkwinkels den Lenkwinkel, der am Wahrscheinlichsten der richtige oder optimale Lenkwinkel ist.

Das hat den Vorteil, dass, wie oben beschrieben, sowohl das neuronale Netz als auch der Bayes'sche Filter ihre jeweiligen Stärken voll ausbilden können und entsprechend einerseits der Aufwand für ein komplexes spezifisches Programmieren eines Messmodells, wie es üblicherweise für Bayes'sche Filter erforderlich ist, nicht notwendig ist und andererseits das neuronale Netz nicht Zusammenhänge abstrakt lernen muss, die konkret bereits explizit bekannt oder verfügbar sind. Damit wird ein Trainieren des neuronalen Netzes vereinfacht und dessen Komplexität reduziert. Es kann so auch ein reines Feedforward neuronales Netz genutzt werden, welches bekanntlich besonders stabil ist. Insgesamt wird somit die Effizienz der Sensorvorrichtung erhöht und die mit einem gegebenen Aufwand erreichbare Leistung der Sensorvorrichtung gesteigert.

In einer vorteilhaften Ausführungsform ist vorgesehen, dass das neuronale Netz ein tiefes neuronales Netz mit mehreren verborgenen Schichten ("hidden layers") umfasst oder ist. Das hat den Vorteil, dass bei dem Klassifizieren besonders komplexe Messinformationen klassifiziert werden können und umgekehrt durch die Verwendung des Bayes'schen Filters zugleich in dem neuronalen Netz besonders viel Komplexität eingespart werden kann.

In einer weiteren vorteilhaften Ausführungsform ist vorgesehen, dass die Zustandsinformation einen Ist-Zustand des Kraftfahrzeugs und/oder einen Ist-Zustand eines Objekts in der Umgebung des Kraftfahrzeugs repräsentiert. Der jeweilige Ist-Zustand kann dabei basierend auf einer vorherigen Messung oder Messinformation und/oder basierend auf einem vorherigen Klassifizierungsergebnis in der Sensorvorrichtung hinterlegt sein. Insbesondere kann die Zustandsinformation dynamisch an einen jeweils aktuellen Ist-Zustand angepasst werden. Beispielsweise kann die Zustandsinformation durch die eine Sensoreinheit der Sensorvorrichtung, welche auch die Messinformation bereitstellt, bereitgestellt werden oder worden sein, oder aber durch eine andere Sensoreinheit der Sensorvorrichtung. Die Zustandsinformation kann, gerade wenn sie einen Ist-Zustand eines Objektes in der Umgebung des Kraftfahrzeugs repräsentiert, auch durch die Sensorvorrichtung eines anderen Kraftfahrzeugs bereitgestellt werden, beispielsweise über eine fahrzeugexterne stationäre Rechenerinrichtung. Beispielsweise kann so über die Zustandsinformation ein verrauschtes Klassifikationsergebnis geglättet werden, indem die Zustandsinformation ein Klassifikationsergebnis eines vorhergehenden Zeitschrittes repräsentiert. Das Bereitstellen, Klassifizieren und Filtern kann auch wiederholt, insbesondere fortlaufend, erfolgen, beispielsweise in diskretisierten Zeitschritten.

Das hat den Vorteil, dass ein Klassifizierungsergebnis, welches im Widerspruch zu einem Ist-Zustand steht beziehungsweise bei einem gegebenen Ist-Zustand unsinnig oder gefährlich ist, entsprechend ausgefiltert werden kann.

In besonders vorteilhaften Ausführungsformen ist jeweils vorgesehen, dass der Bayes'sche Filter einen Kalman-Filter umfasst oder ein solcher ist, und/oder der Bayes'sche Filter einen Bernoulli-Filter, insbesondere einen Multi-Bernoulli-Filter, umfasst oder ein solcher ist, und/oder der Bayes'sche Filter einen Partikelfilter umfasst oder ein solcher ist. Alternativ oder ergänzend kann der Bayes'sche Filter einen Wahrscheinlichkeits-Hypothese-Dichte-Filter (Probability Hypothesis Density Filter, PHD-Filter) und/oder einen kardinalisierten Wahrscheinlichkeits-Hypothese-Dichte-Filter (Cardinalized Probability Hypothesis Density Filter, CPHD-Filter) und/oder einen markierten Multi-Bernoulli-Filter (Labeled Mulit-Bernoulli Filter, LMB-Filter) und/oder einen generalisierten markierten Multi-Bernoulli-Filter (Generalized Labeled Mulit-Bernoulli Filter, GLMB-Filter) umfassen.

Die unterschiedlichen Filter bringen hier eine Reihe von Vorteilen mit sich. So ist der Kalman-Filter bekannt und zuverlässig in sogenannten Tracking-Problemen. Der Bernoulli-Filter ist der optimale Bayes'sche Filter für ein dynamisches System mit einem Objekt beziehungsweise einer zu filternden oder zu schätzenden Größe, welches auch ein Nicht-Detektieren ein Nicht-Klassifizieren des entsprechenden Objekts beziehungsweise der entsprechenden Größe zulässt, beispielsweise wenn ein optimaler Steuerwinkel in einer Situation nicht detektiert oder bestimmt werden kann. Der Multi-Bernoulli-Filter ermöglicht hier auch das Detektieren mehrerer Objekte oder Größen. Die Verwendung eines Partikelfilters erlaubt hier das Nutzen einer Aktivitätsverteilung von Ausgabeneuronen als Wahrscheinlichkeitsfunktion des Partikelfilters, weshalb dieser besonders einfach implementiert werden kann.

In einer weiteren vorteilhaften Ausführungsform ist vorgesehen, dass das neuronale Netz ein lernendes Netz umfasst oder ist und bei dem Lernen zumindest ein Ergebnis des Klassifizierens mit zumindest einer Vergleichsinformation, insbesondere der Zustandsinformation oder einem vorhergehenden Ergebnisses des Klassifizierens, verglichen wird und bei dem Lernen eine Abweichung zwischen dem Ergebnis des Klassifizierens und der Vergleichsinformation verringert wird. Insbesondere kann die Sensorvorrichtung zwischen einem Lernbetriebsmodus, in welchem ein Lernen des neuronalen Netzes aktiviert ist, und einem Normalbetriebsmodus, in welchem das Lernen deaktiviert ist, umschaltbar sein. Bevorzugt erfolgen dabei auch in dem Lernmodus das Klassifizieren sowie das Filtern und gegebenenfalls das Bereitstellen des gefilterten Ergebnisses für eine Steuerfunktion und/oder Regelfunktion. Es kann auch das Bereitstellen der Messinformation in dem Lernbetriebsmodus erfolgen, das Lernen kann also auch während des Betriebs des Kraftfahrzeugs ("online") erfolgen, um somit bisher unbekannte Situationen zu erlernen.

Das hat den Vorteil, dass die Leistungsfähigkeit der Sensorvorrichtung auch erhöht werden kann, nachdem die Sensorvorrichtung ausgeliefert wurde, also bei bestimmungsgemäßem Gebrauch in einem Regelbetrieb, da beispielsweise über den Bayes'schen Filter gefährliche Ausreißer bei dem Erlernen kompensiert werden können, und somit trotz erhöhter Flexibilität des Systems gefährliche Fehlentscheidungen der Sensorvorrichtung ausgeschlossen werden können.

In einer vorteilhaften Ausführungsform kann dabei vorgesehen sein, dass die Vergleichsinformation einen zeitlichen Mittelwert oder zeitlichen Verlauf der Zustandsinformation und/oder einen zeitlichen Mittelwert oder zeitlichen Verlauf des vorhergehenden Ergebnisses des Klassifizierens umfasst. Hierbei können gegebenenfalls das Bereitstellen, das Klassifizieren und das Filtern wiederholt erfolgen, beispielsweise, wenn die Vergleichsinformation ein Ergebnis des Klassifizierens umfasst. Somit können beispielsweise wenn ein Kamerabild als ein Kamerabild mit einem Personenkraftwagen an einer vorgegebenen Position klassifiziert wird, jedoch in einer vorgegebenen Anzahl darauffolgender und/oder vorhergehender weiterer Zeitschritte das entsprechende Kamerabild mehrfach als Kamerabild mit einem Lastkraftwagen an den entsprechenden Positionen klassifiziert wird, in dem neuronalen Netzwerk die Klassifikationskriterien für den Personenkraftwagen geändert werden, da wahrscheinlich der in dem einen Kamerabild erkannte Personenkraftwagen ebenfalls eigentlich ein Lastkraftwagen ist.

Das hat den Vorteil, dass gerade bei Verwenden der Zustandsinformation oder eines vorhergehenden Ergebnisses des Klassifizierens als Vergleichsinformation die Sensorvorrichtung selbstständig ohne zusätzliche Information oder zusätzlichen Eingriff von außen im laufenden Betrieb optimiert werden kann.

In einer weiteren vorteilhaften Ausführungsform kann dabei vorgesehen sein, dass die Vergleichsinformation von einem kraftfahrzeugexternen Objekt, insbesondere einem anderen Kraftfahrzeug oder einer stationären Recheneinrichtung, beispielsweise einer sogenannten Cloud, übermittelt wird oder wurde. Es kann auch allgemein die vorgegebene Zustandsinformation von dem kraftfahrzeugexternen Objekt bereitgestellt werden.

Das hat den Vorteil, dass das Ergebnis und damit die Leistung der Sensorvorrichtung über die Cloud beziehungsweise über das kraftfahrzeugexterne Objekt validiert werden kann, beispielsweise somit ein kraftfahrzeugexternes Objekt in der Umgebung des Kraftfahrzeugs beziehungsweise eine Zustandsinformation, welche sich auf einen Zustand eines Objektes in der Umgebung des Kraftfahrzeugs bezieht, von einem anderen Kraftfahrzeug, welches beispielsweise dem fraglichen Objekt näher ist, besser erfasst und entsprechend die Zustandsinformation genauer bestimmt werden kann, sodass die Steuervorrichtung hier weiter verbessert wird.

Die Erfindung betrifft auch eine Sensorvorrichtung für ein Kraftfahrzeug, mit einer Sensoreinheit zum Bereitstellen von einer Messinformation über eine Umgebung des Kraftfahrzeugs und mit einem neuronalen Netz zum Klassifizieren der bereitgestellten Messinformation. Wichtig ist hier, dass die Sensorvorrichtung auch einen Bayes'schen Filter aufweist, welcher ausgebildet ist, ein Ergebnis des Klassifizierens zu filtern, sodass das Ergebnis des Klassifizierens in Abhängigkeit einer für den Bayes'schen Filter vorgegebenen Zustandsinformation an einen von der Zustandsinformation repräsentierten Zustand beispielsweise des Kraftfahrzeugs und/oder eines fahrzeugexternen Objektes angepasst wird.

Vorteile und vorteilhafte Ausführungsformen der Sensorvorrichtung entsprechen hier Vorteilen und vorteilhaften Ausführungsformen des geschilderten Verfahrens.

Die Erfindung betrifft auch ein Kraftfahrzeug mit einer solchen Sensorvorrichtung.

Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von diesen abweichen.

Ausführungsbeispiele der Erfindung werden nachfolgend anhand schematischer Zeichnungen näher erläutert. Es zeigen:
Dabei zeigt:

Fig. 1    ein Kraftfahrzeug mit einer beispielhaften Ausführungsform einer Sensorvorrichtung; und

Fig. 2    eine weitere beispielhafte Ausführungsform einer Sensorvorrichtung.

Gleiche oder funktionsgleiche Elemente werden in den Figuren mit den gleichen Bezugszeichen versehen.

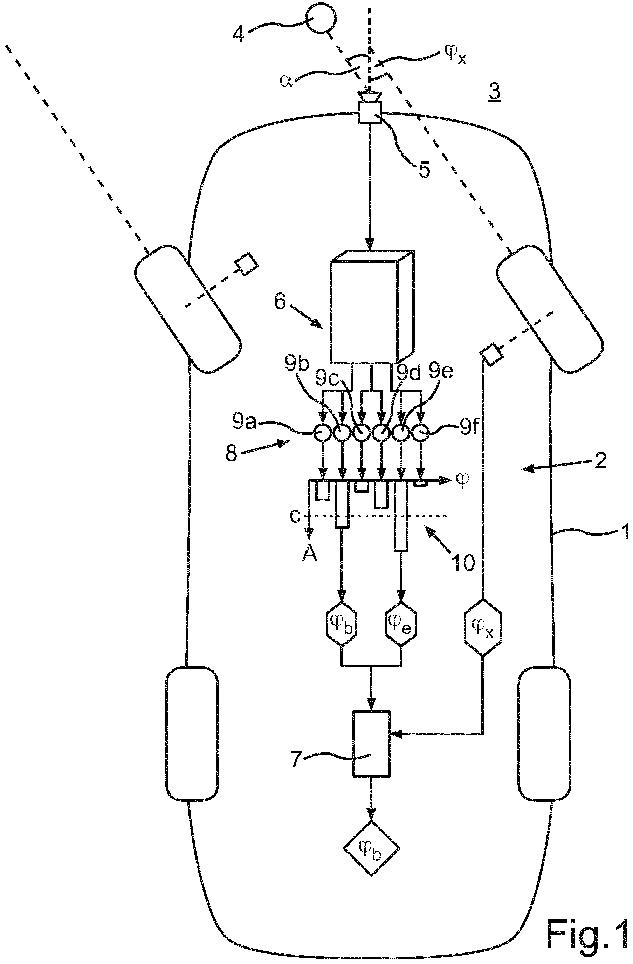

In Fig. 1 ist ein Kraftfahrzeug 1 mit einer beispielhaften Ausführungsform einer Sensorvorrichtung 2 dargestellt. In einer Umgebung 3 des Kraftfahrzeugs 1 befindet sich dabei ein Objekt 4, welches vorliegend durch eine in diesem Beispiel als Kamera ausgeführte Sensoreinheit 5 erfasst wird. Das Objekt 4 ist vorliegend in einem Winkel $\alpha$ relative zu dem Kraftfahrzeug 1 links vor diesem angeordnet. Neben der als Kamera ausgeführten Sensoreinheit 5 zum Bereitstellen einer Messinformation über die Umgebung 3 weist die Sensorvorrichtung 2 noch ein neuronales Netz 6 zum Klassifizieren der bereitgestellten Messinformation auf, sowie einen Bayes'schen Filter 7, welcher ausgebildet ist, ein Ergebnis des Klassifizierens zu filtern.

Im vorliegenden Beispiel wird nun durch die Sensorvorrichtung 2 ein optimaler Lenkwinkel $\phi$ basierend auf einem Videobild als Messinformation der Sensoreinheit 5 abgeschätzt.

Eine Sensorvorrichtung 2, welche hier allein auf einem neuronalen Netzwerk basierte, liefert dabei ein stark verrauschtes Signal, welches nicht unmittelbar als Steuersignal verwendet werden kann. Dies liegt daran, dass das neuronale Netzwerk den optimalen Lenkwinkel $\phi$ basierend auf einem jeweiligen Einzelbild der Sensoreinheit 5 abschätzt und somit keinerlei Gedächtnis hat. Ein solches Gedächtnis würde jedoch das zufällige Rauschen in den Einzelbildern kompensieren und somit plötzlichen Ausschlägen in dem bestimmten optimalen Lenkwinkel $\phi$ entgegenwirken. Der klassische Ansatz, welcher bei der Verwendung von neuronalen Netzen bekannt ist, wäre nunmehr, eine Rekursion in das System einzubauen. Dies würde jedoch nur bewirken, dass die Lenkung geglättet wird und eine Art "Ansteuermoment" erhält.

In dem vorgeschlagenen System wird nun mittels des neuronalen Netzes 6 ausgehend von der von der Sensoreinheit 5 bereitgestellten Messinformation, hier dem Bild, ein optimaler Lenkwinkel $\phi$ bestimmt. Dies ist keine triviale Aufgabe und für ein explizites Spezifizieren, das heißt ein Programmieren eines Algorithmus eine große Herausforderung. Als Ergebnis wird vorliegend in einer Ausgabeschicht 8 mit einer Reihe von Ausgabeneuronen 9a bis 9f der vom neuronalen Netzwerk 6 bestimmte optimale Lenkwinkel $\phi$ über eine Aktivitätsverteilung 10 der Neuronen dargestellt. Diese Aktivitätsverteilung 10 ist hier als ein Histogramm der Aktivität A über dem Winkel $\phi$ dargestellt. Im gezeigten Beispiel wird nun eine Schwelle c angewendet, um den Einfluss eines Rauschens des neuronalen Netzes 6 auf das Verhalten der Sensorvorrichtung 2 zu reduzieren. Entsprechend liefert das Klassifizieren als Ergebnis vorliegend die Lenkwinkel $\phi$ als optimale Lenkwinkel, deren zugeordnete Ausgabeneuronen 9a bis 9f eine Aktivität A von größer als c aufweisen. Im gezeigten Beispiel sind dies die beiden Neuronen 9e und 9b, wobei das Ausgabeneuron 9e vorliegend eine höhere Aktivität A aufweist. Entsprechend würde nun gemäß dem neuronalen Netz 6 der Lenkwinkel $\phi_e$ der optimale Lenkwinkel sein. Dabei bleibt jedoch der Ist-Lenkwinkel $\phi_x$ unberücksichtigt.

Anstelle eines Einfügens einer Gedächtnisfunktion, die beispielsweise den Ist-Lenkwinkel $\phi x$ repräsentiert wird nun vorliegend eine Bayes'sche Rekursion für das Berücksichtigen eines entsprechenden Zustands, hier des Ist-Lenkwinkels des Kraftfahrzeugs 1, genutzt. Dabei wird der Ist-Lenkwinkel $\phi x$ als Zustandsinformation an dem Bayes'schen Filter 7 bereitgestellt. Somit kann im dargestellten Beispiel der Bayes'sche Filter 7 dafür sorgen, dass trotz der höheren Aktivität A des Ausgabeneurons 9e nicht der Lenkwinkel $\phi e$, sondern vielmehr der Lenkwinkel $\phi b$ des Ausgabeneurons 9b als optimaler Lenkwinkel bestimmt wird, sodass das Kraftfahrzeug 1 in dem gezeigten Beispiel nicht rechts an dem Objekt 4, sondern vielmehr links an dem Objekt 4 vorbeifährt, da das Kraftfahrzeug aufgrund des Ist-Lenkwinkels $\phi x$ in der dargestellten Situation leichter links an dem Objekt 4 vorbeizusteuern ist als rechts.

Im gezeigten Beispiel kann der Bayes'sche Filter ein Bernoulli-Filter sein, bei welchem eine einzelne zu verfolgende Größe auch verschwinden kann, das heißt beispielsweise der Filter 7 feststellen kann, dass es keinen optimalen Lenkwinkel gibt. Dies wäre beispielsweise der Fall, wenn keines der Ausgabeneuronen 9a bis 9f eine Aktivität hat, welche größer als c ist.

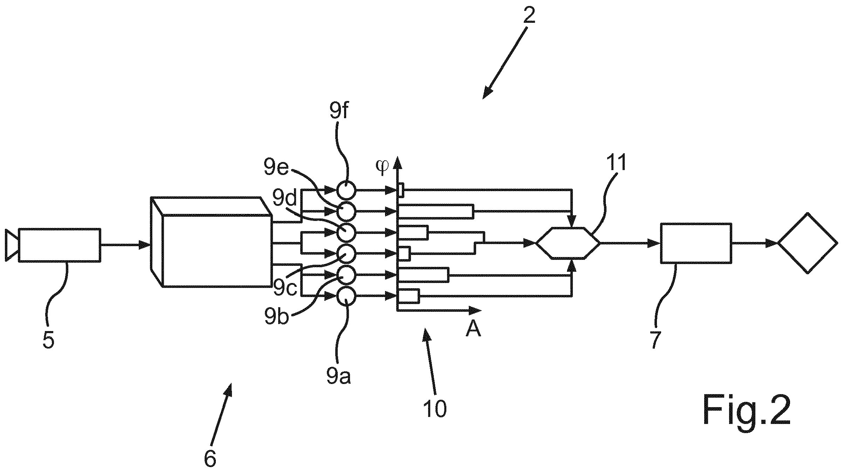

Fig. 2 zeigt nun die Sensorvorrichtung 2 in einer alternativen Ausführungsform, bei welcher der Bayes'sche Filter 7 als Partikelfilter ausgeführt ist. Die in dem Histogramm 10 dargestellte Aktivitätsverteilung der Ausgabeneuronen 9a bis 9f wird dabei direkt als Wahrscheinlichkeitsfunktion 11 für den Partikelfilter genutzt. Daher ist beispielsweise ein weiterer Verarbeitungsschritt wie ein Vergleichen mit der Schwelle c wie in Fig. 1 nicht erforderlich, sodass auf besonders einfache Weise die Verknüpfung zwischen dem neuronalen Netz 6 und dem Bayes'schen Filter 7 hergestellt werden kann.

## Patentansprüche

1. Verfahren zum Betreiben einer Sensorvorrichtung (2) eines Kraftfahrzeugs (1), mit den Verfahrensschritten:

   a) Bereitstellen von einer Messinformation durch eine Sensoreinheit (5) der Sensorvorrichtung (2);
   b) Klassifizieren der bereitgestellten Messinformation durch ein neuronales Netz (6) der Sensorvorrichtung (2);
   c) Filtern eines Ergebnisses des Klassifizierens mittels eines Bayes'schen Filters (7) der Sensorvorrichtung (2), sodass das Ergebnis in Abhängigkeit einer für den Bayes'schen Filter (7) vorgegebenen Zustandsinformation an einen von der Zustandsinformation repräsentierten Zustand des Kraftfahrzeugs (1) oder eines Objekts (4) in der Umgebung (3) des Kraftfahrzeugs (1) angepasst wird.

2. Verfahren nach Anspruch 1,
   **dadurch gekennzeichnet, dass**
   das neuronale Netz (6) ein tiefes neuronales Netz mit mehreren verborgenen Schichten umfasst.

3. Verfahren nach einem der vorhergehenden Ansprüche,
   **dadurch gekennzeichnet, dass**
   die Messinformation eine Umgebung (3) des Kraftfahrzeugs (1) und/oder das Kraftfahrzeug (1) betrifft.

4. Verfahren nach einem der vorhergehenden Ansprüche,
   **dadurch gekennzeichnet, dass**
   die Zustandsinformation einen Ist-Zustand des Kraftfahrzeugs (1) und/oder einen Ist-Zustand eines Objekts (4) in der Umgebung (3) des Kraftfahrzeugs (1) repräsentiert und insbesondere dynamisch an den jeweils aktuellen Ist-Zustand angepasst wird.

5. Verfahren nach einem der vorhergehenden Ansprüche,
   **dadurch gekennzeichnet, dass**
   der Bayes'sche Filter (7) einen Kalman Filter umfasst.

6. Verfahren nach einem der vorhergehenden Ansprüche,
   **dadurch gekennzeichnet, dass**
   der Bayes'sche Filter (7) einen Bernoulli Filter, insbesondere einen Multi-Bernoulli Filter, umfasst.

7. Verfahren nach einem der vorhergehenden Ansprüche,
   **dadurch gekennzeichnet, dass**
   der Bayes'sche Filter (7) einen Partikel Filter umfasst.

8. Verfahren nach einem der vorhergehenden Ansprüche,
   **dadurch gekennzeichnet, dass**
   das neuronale Netz (6) ein lernendes Netz umfasst, und bei dem Lernen ein Ergebnis des Klassifizierens mit einer Vergleichsinformation, insbesondere der Zustandsinformation oder einem vorhergehenden Ergebnisses des Klassifizierens, verglichen wird und bei dem Lernen eine Abweichung zwischen dem Ergebnis des Klassifizierens und der Vergleichsinformation verringert wird.

9. Verfahren nach Anspruch 7,
   **dadurch gekennzeichnet, dass**
   die Vergleichsinformation einen zeitlichen Mittelwert oder Verlauf der Zustandsinformation oder einen Mittelwert oder Verlauf des vorhergehenden Ergebnisses des Klassifizierens umfasst.

10. Verfahren nach Anspruch 7 oder 8,

**dadurch gekennzeichnet, dass**
die Vergleichsinformation von einem kraftfahrzeugexternen Objekt, insbesondere einem anderen Kraftfahrzeug (1) oder einer stationärem Rechneinrichtung übermittelt wurde.

11. Sensorvorrichtung (2) für ein Kraftfahrzeug (1), mit

   - einer Sensoreinheit (5) zum Bereitstellen von einer Messinformation über eine Umgebung (3) des Kraftfahrzeugs (1);
   - einem neuronalen Netz (6) zum Klassifizieren der bereitgestellten Messinformation;
   **gekennzeichnet durch**
   - einen Bayes'schen Filter (7), welcher ausgebildet ist, ein Ergebnis des Klassifizierens zu filtern, sodass das Ergebnis in Abhängigkeit einer für den Bayes'schen Filter (7) vorgegebenen Zustandsinformation an einen von der Zustandsinformation repräsentierten Zustand angepasst wird.

12. Kraftfahrzeug (1) mit einer Sensorvorrichtung (2) nach Anspruch 10.

Fig.1

Fig.2

**Europäisches Patentamt**
**European Patent Office**
**Office européen des brevets**

## EUROPÄISCHER RECHERCHENBERICHT

Nummer der Anmeldung

EP 18 19 5661

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 9 014 905 B1 (KRETZSCHMAR HENRIK [DE] ET AL) 21. April 2015 (2015-04-21) <br> * Spalte 5, Zeile 17 - Zeile 30 * <br> * Spalte 7, Zeile 45 - Zeile 60 * <br> * Spalte 11, Zeile 13 - Spalte 18, Zeile 21 * <br> ----- | 1-12 | INV. <br> G06N3/02 <br> G06N3/04 <br> G06N7/00 |
| X | EP 3 219 564 A1 (IMRA EUROPE S A S [FR]) 20. September 2017 (2017-09-20) <br> * Absatz [0005] * <br> * Absatz [0008] * <br> ----- | 1-12 | |
| A | SISWANTORO JOKO ET AL: "A linear model based on Kalman filter for improving neural network classification performance", <br> EXPERT SYSTEMS WITH APPLICATIONS, OXFORD, GB, <br> Bd. 49, 21. Dezember 2015 (2015-12-21), <br> Seiten 112-122, XP029385944, <br> ISSN: 0957-4174, DOI: 10.1016/J.ESWA.2015.12.012 <br> * Zusammenfassung * <br> * Abbildungen 3, 4 * <br> ----- | 1,4,5,8 | |
| | | | **RECHERCHIERTE SACHGEBIETE (IPC)** <br><br> G06N <br> G05D <br> B60W <br> B62D <br> G06K |

Der vorliegende Recherchenbericht wurde für alle Patentansprüche erstellt

| Recherchenort | Abschlußdatum der Recherche | Prüfer |
|---|---|---|
| Den Haag | 6. Februar 2019 | Bohn, Patrice |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 19 5661

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-02-2019

| Im Recherchenbericht angeführtes Patentdokument | Datum der Veröffentlichung | Mitglied(er) der Patentfamilie | Datum der Veröffentlichung |
|---|---|---|---|
| US 9014905 B1 | 21-04-2015 | KEINE | |
| EP 3219564 A1 | 20-09-2017 | KEINE | |

EPO FORM P0461

Für nähere Einzelheiten zu diesem Anhang : siehe Amtsblatt des Europäischen Patentamts, Nr.12/82